# EUROPÄISCHE PATENTSCHRIFT

(11) **EP 4 341 976 B1**
(45) Veröffentlichungstag und Bekanntmachung des Hinweises auf die Patenterteilung: **29.04.2026**
(21) Anmeldenummer: 22741174.1
(22) Anmeldetag: 27.06.2022
(51) Int. Cl.: H01H 33/662, H01H 33/59, H02H 3/033

(54) **VAKUUMSCHALTRÖHRE UND ANORDNUNG MIT VAKUUMSCHALTRÖHREN SOWIE VERFAHREN ZUM ABSTEUERN VON VAKUUMSCHALTRÖHREN**
VACUUM INTERRUPTER, ASSEMBLY COMPRISING VACUUM INTERRUPTERS AND METHOD FOR CONTROLLING VACUUM INTERRUPTERS
INTERRUPTEUR À VIDE, ENSEMBLE D'INTERRUPTEURS À VIDE ET PROCÉDÉ DE COMANDE D'INTERRUPTEURS À VIDE

(30) Priorität: 23.07.2021 DE 102021207960
(43) Veröffentlichungstag der Anmeldung: 27.03.2024
(73) Patentinhaber: Siemens Energy Global GmbH & Co. KG, 81739 München (DE)
(72) Erfinder: GOEBELS, Tobias Alexander, 47661 Issum (DE); KOSSE, Sylvio, 01640 Coswig (DE); NIKOLIC, Paul Gregor, 91058 Erlangen (DE)
(86) Internationale Anmeldenummer: PCT/EP2022/067490
(87) Internationale Veröffentlichungsnummer: WO 2023/001492

(56) Entgegenhaltungen:
- WO-A1-02/097839
- WO-A1-2020/025407
- DE-A1- 102019 215 309
- JP-U- S54 163 773

## Beschreibung

Die Erfindung betrifft eine Vakuumschaltröhre zum Schalten von Spannungen, mit wenigstens einer Hülle und mit wenigstens einem festen Kontakt sowie mit wenigstens einem beweglichen Kontakt. Weiterhin umfasst die Erfindung eine Anordnung mit zuvor beschriebenen Vakuumschaltröhren sowie ein Verfahren zum Absteuern von Vakuumschaltröhren.

Vakuumschaltröhren bzw. Vakuumschalter, welche Anordnungen von Vakuumschaltröhren umfassen, sind Leistungsschalter, bei denen relativ zueinander bewegbare Schaltkontakte in wenigstens einer Vakuumschaltkammer angeordnet sind. Vakuumschaltröhren sind z. B. aus der WO 02/097839 A1, der JP S54163773 U und der DE 10 2019 215309 A1 bekannt. Die WO 2020/025407 A1 offenbart eine Vakuumschaltröhre, die dem Oberbegriff des Anspruchs 1 entspricht.

In der Hochspannungstechnik werden derartige Vakuumschaltröhren zum Schalten von Spannungen im Hochspannungsbereich, insbesondere größer oder gleich 52 kV, und/oder zum Schalten großer Ströme im Bereich von bis zu einigen zehn Kiloampere verwendet. Vakuumschaltröhren, insbesondere umfasst von Anordnungen zum Schalten, sind wartungsarm, langlebig, und werden insbesondere über Federspeicheranriebe einfach und zuverlässig angetrieben. Für hohe Spannungsanforderungen werden z. B. Anordnungen mit mehreren Vakuumschaltröhren verwendet, deren Schaltstrecken elektrisch in Reihe geschaltet sind, wie z. B. aus der DE 10 2013 208 419 A1 bekannt ist. Alternativ werden z. B. Vakuumschaltröhren mit mehreren Schaltstrecken insbesondere in einer Vakuumschaltröhre verwendet.

Im Fall von mehreren Vakuumschaltröhren wird, bei geöffneten Schaltstrecken der Vakuumschaltröhren, eine den Vakuumschaltröhren angepasste Spannungsaufteilung auf die Vakuumschaltröhren angestrebt, d. h. Absteuerung, um eine Überlastung einzelner Vakuumschaltröhren zu vermeiden. Im Fall von Vakuumschaltröhren mit mehreren Schaltstrecken in insbesondere einer Vakuumschaltröhre wird, bei geöffneten Schaltstrecken der Vakuumschaltröhre, eine den Schaltstrecken angepasste Spannungsaufteilung bzw. Absteuerung angestrebt, um eine Überlastung zu vermeiden. Beispielsweise wird bei mehreren gleichartig ausgebildeten, hintereinander geschalteten Vakuumschaltröhren bzw. Schaltstrecken, eine möglichst gleichmäßige Spannungsaufteilung auf die Vakuumschaltröhren respektive Schaltstrecken angestrebt. Bei Verwendung einer Vakuumschaltröhre mit einer Schaltstrecke wird z. B. ebenfalls eine möglichst gleichmäßige Spannungsaufteilung über die Vakuumschaltröhre hinweg respektive über die Schaltstrecke hinweg angestrebt.

Um eine angestrebte Spannungsaufteilung auf die Vakuumschaltröhren bzw. Schaltstrecken zu erreichen, werden beispielsweise passive elektrische Bauelemente wie z. B. ein Steuerwiderstand parallel zu einer Vakuumschaltröhre geschaltet. Diese Bauelemente vergrößern jedoch den für einen Vakuumschalter mit einer Vakuumschaltröhre bzw. für eine Anordnung mit mehreren Vakuumschaltröhren benötigten Bauraum. Insbesondere bei einem Vakuumschalter mit gereinigter und entfeuchteter Druckluft, d. h. Clean Air als die Vakuumschaltröhre umgebendes Isoliergas, sind relativ große Isolationsabstände zwischen einer Vakuumschaltröhre und einem passivem elektrischen Bauelement sowie zwischen einem passivem elektrischen Bauelement und einem insbesondere metallischen Schaltergehäuse der Anordnung von einer oder mehr Vakuumschaltröhren notwendig, da die Druckluft eine relativ geringe elektrische Durchschlagfestigkeit im Vergleich zu anderen Isoliergasen, wie z. B. Schwefelhexafluorid, aufweist. Um eine ausreichende Isolation zwischen den Vakuumschaltröhren und Schaltungen mit passiven Bauelementen zu erreichen, ist z. B. die Anordnung der Vakuumschaltröhren und verschalteten passiven Bauelemente in unterschiedlichen Gehäusen möglich. Diese Anordnungen sind jedoch mit einem hohen Platzbedarf und Kosten verbunden.

Der Erfindung liegt die Aufgabe zugrunde, eine Spannungssteuerung an einer Vakuumschaltröhre und/oder einer Anordnung mit mehreren Vakuumschaltröhren, mit geringem Platzbedarf zu ermöglichen, und/oder ein Verfahren zum Absteuern von Vakuumschaltröhren mit geringem Platzbedarf anzugeben.

Die Aufgabe wird erfindungsgemäß durch eine Vakuumschaltröhre zum Schalten von Spannungen mit den Merkmalen des Anspruchs 1, einer Anordnung mit zuvor beschriebenen Vakuumschaltröhren gemäß Anspruch 9, und einem Verfahren zum Absteuern von zuvor beschriebenen Vakuumschaltröhren, gemäß Anspruch 11 gelöst. Vorteilhafte Ausgestaltungen der erfindungsgemäßen Vakuumschaltröhre zum Schalten von Spannungen und/oder der erfindungsgemäßen Anordnung mit zuvor beschriebenen Vakuumschaltröhren, sind in den Unteransprüchen angegeben. Dabei sind Gegenstände des Hauptanspruchs mit Merkmalen von Unteransprüchen und Merkmale der Unteransprüche untereinander kombinierbar.

Eine erfindungsgemäße Vakuumschaltröhre zum Schalten von Spannungen umfasst wenigstens eine Hülle und wenigstens einen festen Kontakt sowie wenigstens einen beweglichen Kontakt. Erfindungsgemäß ist wenigstens ein Steuerelement umfasst, welches direkt an der wenigstens einen Vakuumschaltröhre angeordnet ist.

Im Weiteren werden Steuerelemente als direkt an der wenigstens einen Vakuumschaltröhre angeordnet bezeichnet, welche in direktem Kontakt zur Vakuumschaltröhre angeordnet sind, oder nur wenige Millimeter Abstand zur Vakuumschaltröhre aufweisen. Insbesondere sind die Steuerelemente in keinem gemeinsamen Gehäuse getrennt von einem Gehäuse der Vakuumschaltröhre angeordnet. Die Anordnung der Steuerelemente direkt an der wenigstens einen Vakuumschaltröhre ermöglicht eine kompakte, platzsparende Anordnung der Steuerelemente und der wenigstens einen Vakuumschaltröhre, insbesondere in einem gemeinsamen Gehäuse, welches z. B. mit Clean Air befüllt ist, mit verringerter Gefahr von elektrischen Überschlägen. Ein kompakter Aufbau ermöglicht eine Materialersparnis, insbesondere eine geringe Gehäusegröße, ermöglicht die Verwendung von alternativen Schaltgasen wie Clean Air in kompakten Anordnungen, verringert Kosten und macht einen einfachen, umweltfreundlichen Einsatz der Vakuumschaltröhren möglich.

Die Vakuumschaltröhre kann eine Hülle umfassen, insbesondere mit wenigstens einem Hauptschirm und mit wenigstens zwei Keramiksegmenten, wobei der wenigstens eine Hauptschirm zwischen den wenigstens zwei Keramiksegmenten angeordnet sein kann. Das wenigstens eine Steuerelement kann direkt an der Hülle der Vakuumschaltröhre angeordnet sein, insbesondere direkt an wenigstens einem Keramiksegment der Hülle. Die Anordnung des wenigstens einen Steuerelements direkt an der Hülle der Vakuumschaltröhre, insbesondere direkt an wenigstens einem Keramiksegment der Hülle, ermöglicht einen platz- bzw. raumsparenden Aufbau mit den zuvor beschriebenen Vorteilen, und eine erhöhte elektrische Überschlagsfestigkeit durch die elektrisch isolierenden Eigenschaften von Keramiksegmenten.

Das wenigstens eine Steuerelement kann wenigstens einen Kondensator und/oder wenigstens einen Widerstand umfassen, und/oder wenigstens ein Steuerelement kann wenigstens ein Kondensator und/oder wenigstens ein Widerstand sein, und/oder alle Steuerelemente können aus Kondensatoren und/oder Widerständen bestehen. Kondensatoren und Widerstände sind geeignet, Spannungen an Vakuumschaltröhren abzusteuern bzw. einen Spannungsabfall insbesondere über Elemente der Vakuumschaltröhre, wie z. B. Schaltkontakte im geöffneten Zustand, Hauptschirmen, und/oder Keramiksegmenten zu steuern bzw. gezielt zu beeinflussen. Insbesondere Kondensatoren, oder Widerstände, oder eine Kombination von Kondensatoren und Widerständen sind geeignet, eine vorbestimmte, gewünschte Spannungsverteilung bzw. einen vorbestimmten, gewünschten Potentialabfall entlang von Vakuumschaltröhren zu erzeugen. Dabei sind Kondensatoren und Widerstände kostengünstig, kompakt und einfach herstellbar und montierbar.

Wenigstens zwei Steuerelemente können umfasst sein, insbesondere drei oder mehr Steuerelemente, welche kreisförmig bzw. konzentrisch am Umfang der wenigstens einen Vakuumschaltröhre, um die Vakuumschaltröhre herum, angeordnet sind. Eine derartige Anordnung ermöglicht eine gleichmäßige Feldverteilung und Absteuerung um den Umfang einer Vakuumschaltröhre herum, eine platzsparende Aufteilung einer notwendigen Kapazität und/oder eines Ohm'schen Widerstands, in diskreten, wenig Raum verbrauchenden Einheiten.

Ein Schirmring kann umfasst sein, insbesondere ringförmig und/oder kreisförmig ausgebildet, welcher insbesondere direkt an der Hülle der Vakuumschaltröhre angeordnet sein kann, und/oder welcher den Umfang der Vakuumschaltröhre umschließen kann. Derartige Schirmringe ermöglichen eine gute Abschirmung elektrischer Felder der Vakuumschaltröhre nach außen hin und eine Vergleichmäßigung der Feldverteilung elektrischer und/oder magnetischer Felder um die Vakuumschaltröhre herum. Die Schirmringe können elektrisch und/oder mechanisch mit Abschirmungen bzw. Dampfschirmen in der Vakuumschaltröhre verbunden sein.

Es sind mehrere Schirmringe umfasst, welche insbesondere jeweils am Umfang eines jeden Keramiksegments, in Längsrichtung der Vakuumschaltröhre beabstandet voneinander, angeordnet sind. Mit mehreren Schirmringen sind die zuvor beschriebenen Vorteile einfach und um die gesamte Vakuumschaltröhre herum erreichbar.

Das wenigstens eine Steuerelement kann zwischen dem wenigstens einen festen Kontakt und dem wenigstens einen beweglichen Kontakt elektrisch und/oder räumlich angeordnet sein. Eine elektrische Kontaktierung der Steuerelemente kann über die Kontakte, Schirmringe und/oder dem Hauptschirm erfolgen. Das wenigstens eine Steuerelement ist zwischen zwei Schirmringen angeordnet. Die Anordnung der Steuerelemente am Umfang der Vakuumschaltröhre direkt, zwischen den Kontakten, Schirmringen und/oder Hauptschirm, ermöglicht eine platzsparende, kompakte Anordnung, einfache elektrische Kontaktierung, gleichmäßige Feldverteilung bei gleichmäßiger Anordnung um den Umfang der Vakuumschaltröhre herum, und insbesondere gleichmäßige, diskrete Aufteilung der Kapazitäten und/oder Ohm'schen Widerstände zwischen den Kontakten, Schirmringen und/oder Hauptschirm. Dies ermöglicht eine diskrete Aufteilung der Kapazitäten und/oder Ohm'schen Widerstände entlang der Längsachse und/oder entlang des Umfangs der Vakuumschaltröhre, und eine gezielte bzw. definierte Absteuerung bzw. Spannungsaufteilung entlang der Längsachse und/oder entlang des Umfangs der Vakuumschaltröhre.

Das wenigstens eine Steuerelement und/oder die Steuerelemente können eine Gesamtkapazität im Bereich von 10 bis 4000 pF, insbesondere im Bereich 500 bis 4000 pF aufweisen. Diese Werte ermöglichen eine gezielte bzw. definierte Absteuerung bzw. Spannungsaufteilung entlang der Längsachse und/oder entlang des Umfangs der Vakuumschaltröhre, mit einem Gesamtwert insbesondere für eine Absteuerung bei Hochspannungen im Bereich größer oder gleich 52 kV. Die Vakuumschaltröhre kann ausgebildet sein, Spannungen im Hochspannungsbereich, insbesondere im Bereich größer oder gleich 52 kV zu schalten.

Eine erfindungsgemäße Anordnung mit zuvor beschriebenen Vakuumschaltröhren umfasst wenigstens zwei, insbesondere mehr als zwei Vakuumschaltröhren, welche elektrisch in Reihe geschaltet sein können. Das Schalten hoher Spannungsebenen, insbesondere von Hochspannungen im Bereich größer oder gleich 52 kV, kann derart mit kostengünstigen, einfach herstellbaren Vakuumschaltröhren erfolgen. Eine Absteuerung wie zuvor beschrieben, mit Steuerelementen jeweils entlang des Umfangs und/oder der Längsachse der Vakuumschaltröhren, ermöglicht eine Spannungsaufteilung auf die Vakuumschaltröhren und gezielte Absteuerung der einzelnen Vakuumschaltröhren, welche in Reihe hintereinandergeschaltet sind. Damit sind die zuvor beschriebenen Vorteile, insbesondere bei platzsparendem, kompaktem Aufbau bzw. Anordnung, erreichbar.

Ein Metalltank- und/oder ein Isolator-Gehäuse kann von der erfindungsgemäßen Anordnung umfasst sein, in welchem die Vakuumschaltröhre bzw. Vakuumschaltröhren angeordnet sein können, insbesondere mit dem Metalltank- und/oder Isolator-Gehäuse befüllt mit Clean Air als Isoliergas. Die kompakte Anordnung der Steuerelemente entlang des Umfangs und/oder der Längsachse direkt an der Vakuumschaltröhre ermöglicht ein kompaktes Metalltank- und/oder ein Isolator-Gehäuse, mit geringem Material- und Kostenaufwand, verringert die Gefahr von elektrischen Überschlägen, reduziert das Isoliergasvolumen und/oder ermöglicht die Verwendung von klimafreundlichen bzw. klimaneutralen Isoliergasen wie z. B. Clean Air in kompakten, z. B. kostengünstig erhältlichen Standard-Gehäusen.

Ein erfindungsgemäßes Verfahren zum Absteuern von Vakuumschaltröhren, insbesondere von zuvor beschriebenen Vakuumschaltröhren und/oder von zuvor beschriebenen Anordnungen mit Vakuumschaltröhren, umfasst, dass ein elektrisches Absteuern mittels Steuerelementen erfolgt, insbesondere mittels Kondensatoren und/oder Widerständen, welche direkt an Vakuumschaltröhren angeordnet sind.

Die Vorteile des erfindungsgemäßen Verfahrens zum Absteuern von Vakuumschaltröhren, insbesondere von zuvor beschriebenen Vakuumschaltröhren und/oder von zuvor beschriebenen Anordnungen mit Vakuumschaltröhren, gemäß Anspruch 12, und die Vorteile der erfindungsgemäßen Anordnung mit zuvor beschriebenen Vakuumschaltröhren gemäß Anspruch 10, sind analog den zuvor beschriebenen Vorteilen der erfindungsgemäßen Vakuumschaltröhre zum Schalten von Spannungen gemäß Anspruch 1 und umgekehrt.

Im Folgenden werden Ausführungsbeispiele der Erfindung schematisch in den Figuren dargestellt und nachfolgend näher beschrieben.

Dabei zeigen die
- Figur 1: schematisch eine erfindungsgemäße Vakuumschaltröhre 1 zum Schalten von Spannungen in Schrägansicht von der Seite, mit Steuerelementen 8 direkt an einer Hülle 2 der Vakuumschaltröhre angeordnet, und
- Figur 2: eine erfindungsgemäße Anordnung 11 von zwei in Reihe geschalteten Vakuumschaltröhren 1 der Figur 1, welche von einem Gehäuse 9 umfasst sind, das z. B. mit Clean Air als Isoliergas 10 befüllt ist.

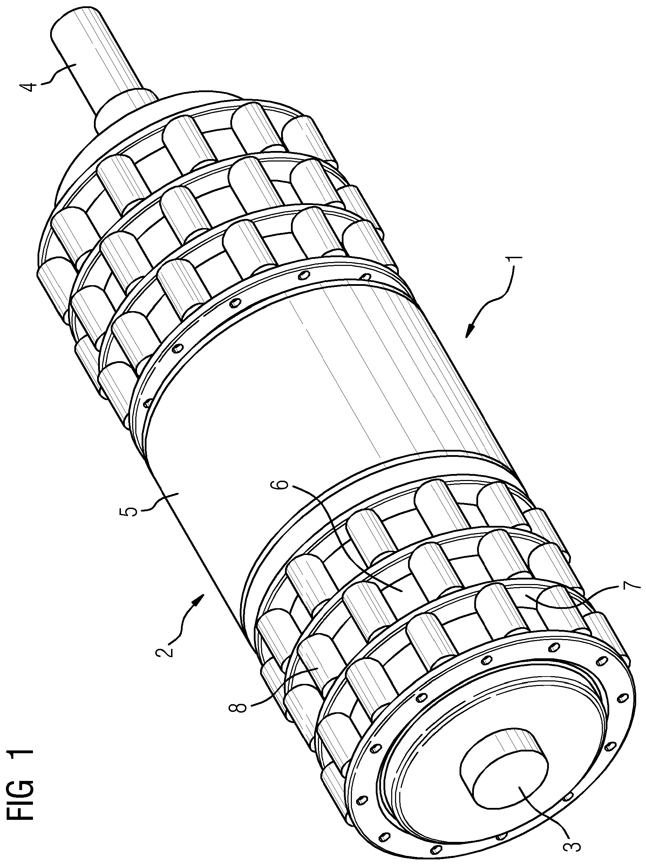

In Figur 1 ist schematisch eine erfindungsgemäße Vakuumschaltröhre 1 zum Schalten von Spannungen, insbesondere von Hochspannungen im Bereich größer oder gleich 52 kV, in Schrägansicht von einer Seite beispielhaft dargestellt. Die Vakuumschaltröhre 1 weist eine Hülle 2 auf, welche unter anderem einen mittigen Hauptschirm 5 und jeweils ein sich rechts und links bündig anschließendes Keramiksegment 6 umfasst. Der Hauptschirm 5 und die Keramiksegmente 6 sind hohlzylinderförmig bzw. rohrförmig ausgebildet, und an den Enden der Vakuumschaltröhre 1 jeweils fluiddicht verschlossen. Im Inneren ist die Vakuumschaltröhre 1 evakuiert bzw. herrscht ein Vakuum. Von den Enden der Vakuumschaltröhre 1 her ragen Kontakte 3 und 4 in die Hülle 2 der Vakuumschaltröhre 1 hinein, z. B. ein fester Kontakt 3 von einer Seite bzw. Grundfläche des Zylinders her und ein beweglicher Kontakt 4 von der anderen Seite bzw. Deckfläche des Zylinders, d. h. der Vakuumschaltröhre 1 her.

Der Hauptschirm 5 ist z. B. aus einem Metall, insbesondere Edelstahl, und umfasst z. B. im Inneren Dampfschirme, welche der Einfachheit halber in den Figuren nicht dargestellt sind.

Die hohlzylinderförmigen Keramiksegmente sind z. B. aus gesinterter Keramik hergestellt und insbesondere oberflächenbehandelt. Die Kontakte 3 und 4 sind z. B. aus Kupfer insbesondere bolzenförmig, mit insbesondere geschlitzten, tellerförmigen Enden im Inneren der Vakuumschaltröhre 1. Der feste Kontakt 3 ist fluiddicht mit einem deckelförmigen Verschluss auf einem Ende der Vakuumschaltröhre 1 verbunden, wobei der Verschluss z. B. aus einem Metall, insbesondere Kupfer oder Stahl hergestellt ist. Der bewegliche Kontakt 4 ist fluiddicht mit einem deckelförmigen Verschluss auf dem anderen Ende der Vakuumschaltröhre 1 verbunden, z. B. über einen Faltenbalg beweglich gelagert, was der Einfachheit halber in den Figuren nicht dargestellt ist, wobei der Verschluss z. B. aus einem Metall, insbesondere Kupfer oder Stahl hergestellt ist.

Über die nach Außen geführten Bolzen des festen Kontakts 3 und des beweglichen Kontakts 4, ist die Vakuumschaltröhre 1 elektrisch kontaktierbar. Der bewegliche Kontakt 4 ermöglicht ein elektrisches Schalten durch Bewegung zum festen Kontakt 3 hin, d. h. zum Schließen eines Spalts zwischen den tellerförmigen Kontakte-Enden der Kontakte 3 und 4, beim Einschalten, und durch Bewegung vom festen Kontakt 3 weg, d. h. zum Erzeugen eines Spalts zwischen den tellerförmigen Kontakte-Enden der Kontakte 3 und 4, beim Ausschalten. Der erzeugte Spalt zwischen den Kontakte-Enden der Kontakte 3 und 4 sowie die Kontakte-Enden selbst, sind im evakuierten Inneren der Vakuumschaltröhre 1 angeordnet, womit ein Spalt im Bereich von Millimetern bis hin zu Zentimetern zum Ausschalten insbesondere von Hochspannungen ausreicht. Die Vakuumschaltröhre 1 hat z. B. eine Länge im Bereich von insbesondere 30 bis 100 Zentimetern, und einen Umfang im Bereich von insbesondere 10 bis 100 Zentimetern.

Erfindungsgemäß sind um den Umfang der Vakuumschaltröhre 1 Steuerelementen 8 direkt an einer Hülle 2 der Vakuumschaltröhre angeordnet. Steuerelemente 8 sind z. B. Kondensatoren und/oder Widerstande. Kondensatoren sind insbesondere keramische Kondensatoren, z. B. mit Werten der Kapazität einzelner Kondensatoren im Bereich von 10 bis 4000 pF. Damit ergibt sich eine Gesamtkapazität der Anordnung im Bereich von z. B. 10 bis 4000 pF. Widerstande sind insbesondere Ohm'sche Widerstände, z. B. mit Werten einzelner Widerstände im Bereich von wenigen Ohm, bis hin zu einigen hundert Ohm, oder einigen tausend Ohm, oder einigen hunderttausend Ohm. Damit ergibt sich ein Gesamtwiderstand im Bereich von wenigen Ohm, bis hin zu einigen hundert Ohm, oder einigen tausend Ohm, oder einigen hunderttausend Ohm.

Die Steuerelemente 8 weisen z. B. eine zylindrische, rechteckige und/oder elliptische Form auf. Eine Anordnung der Steuerelemente 8 um den Umfang der Hülle 2 der Vakuumschaltröhre 1 herum erfolgt z. B. kreisförmig entlang des Querschnitts des Umfangs, wobei die Steuerelemente insbesondere parallel zueinander verschaltet sind, insbesondere mit regelmäßigen und/oder gleichen Abständen voneinander, und/oder erfolgt entlang der Längsachse der Vakuumschaltröhre 1, in Reihe elektrisch verschaltet. Eine elektrische Kontaktierung von benachbarten, in Reihe hintereinander geschalteten Steuerelementen 8 erfolgt z. B. über Schirmringe 7, welche jeweils kreis- bzw. ringförmig entlang des Querschnitts des Umfangs der Vakuumschaltröhre 1 angeordnet bzw. ausgebildet sind, mit Schirmringen 7 beabstandet voneinander entlang der Längsachse der Vakuumschaltröhre 1.

Wie in der Figur 1 dargestellt ist, sind die Steuerelemente 8 z. B. entlang des Umfangs der Hülle 2 der Vakuumschaltröhre 1 elektrisch und räumlich beabstandet angeordnet, auf kreisförmigen Querschnitten des Umfangs der Vakuumschaltröhre 1, entlang der Längsachse der Vakuumschaltröhre 1 zwischen benachbarten Schirmringen 7, insbesondere symmetrisch angeordnet. Dabei dienen die Schirmringe 7 und der Hauptschirm 5 der gut elektrisch leitenden Kontaktierung der Steuerelemente 8 untereinander und zwischen bzw. mit den Kontakten 5 und 6, z. B. über die deckelförmigen Verschlüsse an den Enden der Vakuumschaltröhre 1, und insbesondere beim beweglichen Kontakt 4 über den Faltenbalg.

Schirmringe 7 sind z. B. aus einem Metall, insbesondere Kupfer und/oder Stahl, und können Keramiksegmente 6 unterteilen über insbesondere Dampfschirme, welche in die Vakuumschaltröhre 1 hineinragen. Eine Verbindung der Elemente der Vakuumschaltröhre 1, wie z. B. von Keramiksegmenten 6, Hauptschirm 5, Schirmringen 7, deckelförmigen Verschlüssen, und/oder mit Steuerelementen 8, erfolgt z. B. durch Verlöten und/oder leitfähigem Kleben. Eine Anordnung der Steuerelemente 8 direkt an der Vakuumschaltröhre 1 bzw. der Hülle 2 der Vakuumschaltröhre 1, umfasst einen stoffschlüssigen mechanischen Kontakt mit der Hülle 2 und/oder einen geringen Abstand im Bereich von Millimetern bis hin zu einem Zentimeter, wobei der direkte Kontakt mit der Hülle z. B. über die Schirmringe 7, den Hauptschirm 5 und/oder den deckelförmigen Verschlüssen erfolgt.

Steuerelemente 8 zwischen unterschiedlichen Schirmringen 7 sind z. B. entlang der Längsachse der Vakuumschaltröhre 1 auf Parallelen der Längsachse, insbesondere geraden oder gekrümmten Linien angeordnet, oder jeweils versetzt zueinander angeordnet. Die Anordnung der Steuerelemente 8 auf dem Umfang der Vakuumschaltröhre ergibt z. B. regelmäßige oder unregelmäßige Muster. Eine direkte Anordnung der Steuerelemente 8 auf dem Umfang der Vakuumschaltröhre 1 bzw. deren Hülle 2 ist platzsparend, mit minimiertem Querschnitt der Anordnung.

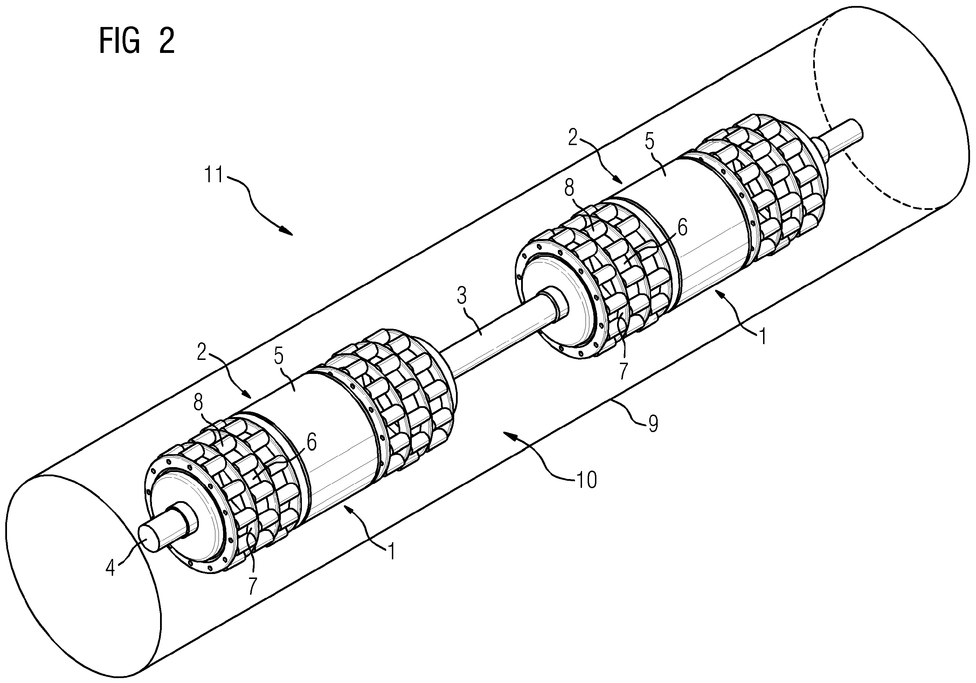

In Figur 2 sind zwei erfindungsgemäße Vakuumschaltröhren 1 der Figur 1 in Reihe hintereinander angeordnet dargestellt, gemäß einer erfindungsgemäßen Anordnung 11 von Vakuumschaltröhren 1. Die Vakuumschaltröhren 1 sind in einem Gehäuse 9 angeordnet bzw. werden von dem Gehäuse 9 räumlich umfasst. Das Gehäuse 9 ist z. B. ein gasdicht verschlossener Metalltank und/oder ein gasdicht verschlossenes Isolator-Gehäuse. Metalltank-Gehäuse sind z. B. aus Stahl und/oder Aluminium, insbesondere auf Erdpotential nach Art eines Dead-Tank. Isolator-Gehäuse sind z. B. aus Keramik, Silikon und/oder Verbundwerkstoffen, insbesondere mit einer gerippten äußeren Oberfläche zur Verlängerung von Kriechstrompfaden. Das Gehäuse 9 ist z. B. mit Clean Air als Isoliergas 10 befüllt, welches klimaneutral ist. Alternativ können Isoliergase 10 wie z. B. SF₆ und/oder CO₂ verwendet werden.

Die Vakuumschaltröhren 1 sind, wie in der Figur 2 dargestellt ist, über die festen Kontakte 3 miteinander verbunden, insbesondere direkt verbunden. Alternativ können die Vakuumschaltröhren 1 über die beweglichen Kontakte 4 miteinander verbunden sein, insbesondere elektrisch und mechanisch, oder eine Verbindung erfolgt über ein bewegliches 4 und ein festes 3 Kontaktstück. Ein oder mehr Antriebe, z. B. ein Motor- und/oder Federspeicherantrieb, sind z. B. vorgesehen, um die beweglichen Kontakte 4 beim elektrischen Schalten anzutreiben, was der Einfachheit halber in den Figuren nicht dargestellt ist. Z. B. ist pro beweglichem Kontakt 4 ein Antrieb vorgesehen, oder ein gemeinsamer Antrieb ist umfasst, insbesondere mit einem Getriebe zum mechanischen Antreiben der beweglichen Kontakte 4.

Die zuvor beschriebenen Ausführungsbeispiele können untereinander kombiniert werden und/oder können mit dem Stand der Technik kombiniert werden. So können z. B. mehr als zwei Vakuumschaltröhren 1 miteinander verschaltet werden, insbesondere in Reihe und/oder parallel. Die Steuerelemente 8 können unterschiedliche Formen aufweisen, insbesondere Kreiszylinderförmige, Zylinderförmige mit elliptischer Grund- und Deckfläche, Rechteckige, Quadratische, und/oder Formen mit konvexer und/oder konkaver Oberfläche. Eine Befestigung der Steuerelemente 8 erfolgt z. B. an der Vakuumschaltröhre 1 durch Löten, insbesondere an Metallteilen wie z. B. Kupferteilen, durch Schrauben, durch Kleben, durch Klemmen und/oder durch Schweißen. Die Steuerelemente 8 sind z. B. direkt kraftschlüssig an der Hülle 2, insbesondere an Keramiksegmenten 6, angeordnet, insbesondere elektrisch isoliert vom Keramiksegment durch einen Isolierlack und/oder einer Oberflächenbehandlung, und/oder z. B. über Federverbindungen befestigt. Und/oder Steuerelemente 8 sind z. B. direkt an der Hülle 2, insbesondere an Keramiksegmenten 6, angeordnet, mit einem geringen Abstand von den Keramiksegmenten 6, zwischen den Schirmringen 7, z. B. verschraubt, geklemmt, gelötete, geklebt und/oder verschweißt, und/oder z. B. über Federverbindungen befestigt. Ein geringer Abstand liegt z. B. im Bereich von wenigen Millimetern bis hin zu einem Zentimeter.

Die Steuerelemente 8 sind z. B. an der Hülle 2 der Vakuumschaltröhre 1 bzw. Vakuumschaltröhren 1 als diskrete Bauteile, insbesondere beabstandet voneinander angeordnet. Dabei erfolgt eine Anordnung z. B. ringförmig, jeweils entlang einem z. B. kreisförmigen Querschnitt der Vakuumschaltröhre 1, mit verschiedenen Ringen entlang der Längsachse der Vakuumschaltröhre 1. Benachbarte Steuerelemente 8 in verschiedenen Ringen sind z. B. auf geraden Linien angeordnet, oder versetzt zueinander. Alternativ oder zusätzlich kann eine Anordnung der Steuerelemente 8 z. B. auf einer Schraubenlinie bzw. Spirale erfolgen. Weiter Anordnungen und/oder Kombinationen von Anordnungen sind ebenfalls möglich.

Mit der zuvor beschriebenen erfindungsgemäßen Vakuumschaltröhre 1 und der erfindungsgemäßen Anordnung von erfindungsgemäßen Vakuumschaltröhren 1 in Reihe hintereinander, insbesondere in Reihe verschaltet, ist über die Steuerelemente 8 ein Absteuern von Spannungen über die Vakuumschaltröhren 1 hinweg möglich. Spannungen können gleichmäßig oder unterschiedlich, vorbestimmt, über die Wahl der Steuerelemente 8 und deren Verschaltung, auf die Vakuumschaltröhren 1 und/oder Elemente der Vakuumschaltröhren 1, wie z. B. verschieden langen Keramiksegmenten 6, aufgeteilt werden. Die direkte Anordnung der Steuerelemente 8 an der Vakuumschaltröhre 1 bzw. den Vakuumschaltröhren 1, ermöglicht einen kompakten, platzsparenden Aufbau, was ein kostengünstiges, räumlich minimiertes Gehäuse 9 ermöglicht, und insbesondere den Einsatz von Isoliergasen, wie z. B. Clean Air, mit geringen bzw. minimierten und/oder Standard-Abmessungen von Gehäusen 9 ermöglicht.

### Bezugszeichen:

- 1: Vakuumschaltröhre
- 2: Hülle
- 3: Fester Kontakt
- 4: Beweglicher Kontakt
- 5: Hauptschirm
- 6: Keramiksegment
- 7: Schirmring
- 8: Steuerelement
- 9: Gehäuse
- 10: Isoliergas
- 11: Anordnung mit Vakuumschaltröhren

## Patentansprüche

1. Vakuumschaltröhre (1) zum Schalten von Spannungen, mit wenigstens einer Hülle (2) mit Keramiksegmenten (6), und mit wenigstens einem festen Kontakt (3) sowie mit wenigstens einem beweglichen Kontakt (4), wobei wenigstens ein Steuerelement (8) umfasst ist, welches direkt an der wenigstens einen Vakuumschaltröhre (1) angeordnet ist, **dadurch gekennzeichnet, dass** mehrere Schirmringe (7) umfasst sind, welche insbesondere jeweils am Umfang eines jeden Keramiksegments (6), in Längsrichtung der Vakuumschaltröhre (1) beabstandet voneinander, angeordnet sind, und wobei das wenigstens eine Steuerelement (8) zwischen zwei Schirmringen (7) angeordnet ist.

2. Vakuumschaltröhre (1) nach Anspruch 1, **dadurch gekennzeichnet, dass** die Vakuumschaltröhre (1) eine Hülle (2) umfasst, insbesondere mit wenigstens einem Hauptschirm (5) und mit wenigstens zwei Keramiksegmenten (6), wobei der wenigstens eine Hauptschirm (5) zwischen den wenigstens zwei Keramiksegmenten (6) angeordnet ist, und dass das wenigstens eine Steuerelement (8) direkt an der Hülle (2) der Vakuumschaltröhre (1) angeordnet ist, insbesondere direkt an wenigstens einem Keramiksegment (6) der Hülle (2).

3. Vakuumschaltröhre (1) nach einem der vorhergehenden Ansprüche, **dadurch gekennzeichnet, dass** das wenigstens eine Steuerelement (8) wenigstens einen Kondensator und/oder wenigstens einen Widerstand umfasst, und/oder das wenigstens ein Steuerelement wenigstens ein Kondensator und/oder wenigstens ein Widerstand ist, und/oder dass alle Steuerelemente aus Kondensatoren und/oder Widerständen bestehen.

4. Vakuumschaltröhre (1) nach einem der vorhergehenden Ansprüche, **dadurch gekennzeichnet, dass** wenigstens zwei Steuerelemente (8) umfasst sind, insbesondere drei oder mehr Steuerelemente (8), welche kreisförmig am Umfang der wenigstens einen Vakuumschaltröhre (1) angeordnet sind.

5. Vakuumschaltröhre (1) nach einem der vorhergehenden Ansprüche, **dadurch gekennzeichnet, dass** wenigstens ein Schirmring (7) umfasst ist, ringförmig und/oder kreisförmig ausgebildet, welcher insbesondere direkt an der Hülle (2) der Vakuumschaltröhre (1) angeordnet ist, und/oder welcher den Umfang der Vakuumschaltröhre (1) umschließt.

6. Vakuumschaltröhre (1) nach einem der vorhergehenden Ansprüche, **dadurch gekennzeichnet, dass** das wenigstens eine Steuerelement (8) zwischen dem wenigstens einem festen Kontakt (3) und dem wenigstens einem beweglichen Kontakt (4) elektrisch und/oder räumlich angeordnet ist.

7. Vakuumschaltröhre (1) nach einem der vorhergehenden Ansprüche, **dadurch gekennzeichnet, dass** das wenigstens eine Steuerelement (8) und/oder die Steuerelemente (8) eine Gesamtkapazität im Bereich von 10 bis 4000 pF, insbesondere im Bereich 500 bis 4000 pF aufweisen.

8. Vakuumschaltröhre (1) nach einem der vorhergehenden Ansprüche, **dadurch gekennzeichnet, dass** die Vakuumschaltröhre (1) ausgebildet ist, Spannungen im Hochspannungsbereich, insbesondere im Bereich größer oder gleich 52 kV zu schalten.

9. Anordnung mit Vakuumschaltröhren (11) nach einem der vorhergehenden Ansprüche, **dadurch gekennzeichnet, dass** wenigstens zwei, insbesondere mehr als zwei Vakuumschaltröhren (1) elektrisch in Reihe geschaltet sind.

10. Anordnung (11) nach Anspruch 9, **dadurch gekennzeichnet, dass** ein Metalltank- und/oder ein Isolator-Gehäuse (9) umfasst ist, in welchem die Vakuumschaltröhren (1) angeordnet sind, insbesondere befüllt mit Clean Air als Isoliergas (10).

11. Verfahren zum Absteuern von Vakuumschaltröhren (1) nach einem der Ansprüche 1 bis 8 und/oder von Anordnungen mit Vakuumschaltröhren (11) nach einem der Ansprüche 9 bis 10, **dadurch gekennzeichnet, dass** ein elektrisches Absteuern mittels Steuerelementen (8) erfolgt, insbesondere mittels Kondensatoren und/oder Widerständen, welche direkt an Vakuumschaltröhren (1) angeordnet sind.

## Claims

1. A vacuum interrupter (1) for switching voltages, having at least one sleeve (2) with ceramic segments (6), and at least one fixed contact (3) and at least one movable contact (4), wherein at least one control element (8) is comprised, which is arranged directly on the at least one vacuum interrupter (1), **characterized in that** multiple shielding rings (7) are comprised, each arranged in particular on the circumference of each ceramic segment (6), spaced apart from one another in the longitudinal direction of the vacuum interrupter (1), and wherein the at least one control element (8) is arranged between two shielding rings (7).

2. The vacuum interrupter (1) according to claim 1, **characterised in that** the vacuum interrupter (1) comprises a sleeve (2) having in particular at least one main shield (5) and at least two ceramic segments (6), wherein the at least one main shield (5) is arranged between the at least two ceramic segments (6), and that the at least one control element (8) is arranged directly on the sleeve (2) of the vacuum interrupter (1), in particular directly on at least one ceramic segment (6) of the sleeve (2).

3. The vacuum interrupter (1) according to any one of the preceding claims, **characterized in that** the at least one control element (8) comprises at least one capacitor and/or at least one resistor, and/or the at least one control element is at least one capacitor and/or at least one resistor, and/or that all control elements consist of capacitors and/or resistors.

4. The vacuum interrupter (1) according to any one of the preceding claims, **characterised in that** at least two control elements (8) are comprised, in particular three or more control elements (8), which are arranged circularly on the circumference of the at least one vacuum interrupter (1).

5. The vacuum interrupter (1) according to any one of the preceding claims, **characterised in that** at least one shielding ring (7) is comprised, configured in an annular and/or circular shape, which is arranged in particular directly on the sleeve (2) of the vacuum interrupter (1), and/or which encloses the circumference of the vacuum interrupter (1).

6. The vacuum interrupter (1) according to any one of the preceding claims, **characterized in that** the at least one control element (8) is arranged electrically and/or spatially between the at least one fixed contact (3) and the at least one movable contact (4).

7. The vacuum interrupter (1) according to any one of the preceding claims, **characterized in that** the at least one control element (8) and/or the control elements (8) have a total capacity in the range of 10 to 4000 pF, in particular in the range of 500 to 4000 pF.

8. The vacuum interrupter (1) according to any one of the preceding claims, **characterised in that** the vacuum interrupter (1) is configured to switch voltages in the high voltage range, in particular in the range greater than or equal to 52 kV.

9. An assembly with vacuum interrupters (11) according to any one of the preceding claims, **characterised in that** at least two, in particular more than two, vacuum interrupters (1) are electrically connected in series.

10. The assembly (11) according to claim 9, **characterised in that** a metal tank and/or insulator housing (9) is comprised, in which the vacuum interrupters (1) are arranged, particularly filled with clean air as an insulating gas (10).

11. A method for controlling vacuum interrupters (1) according to any one of claims 1 to 8 and/or assemblies with vacuum interrupters (11) according to any one of claims 9 to 10, **characterised in that** electrically controlling is performed by means of control elements (8), in particular by means of capacitors and/or resistors which are arranged directly on vacuum interrupters (1).

## Revendications

1. Ampoule à vide (1) pour la commutation de tensions, comprenant au moins une enveloppe (2) dotée de segments céramiques (6), et comprenant au moins un contact fixe (3) ainsi qu'au moins un contact mobile (4), dans laquelle au moins un élément de commande (8) est inclus, lequel est disposé directement sur ladite au moins une ampoule à vide (1), **caractérisée en ce que** plusieurs anneaux de blindage (7) sont inclus, lesquels sont notamment disposés respectivement sur la circonférence de chaque segment céramique (6), de manière espacée les uns des autres dans la direction longitudinale de l'ampoule à vide (1), et dans laquelle ledit au moins un élément de commande (8) est disposé entre deux anneaux de blindage (7).

2. Ampoule à vide (1) selon la revendication 1, **caractérisée en ce que** l'ampoule à vide (1) comprend une enveloppe (2), notamment dotée d'au moins un blindage principal (5) et d'au moins deux segments céramiques (6), dans laquelle ledit au moins un blindage principal (5) est disposé entre lesdits au moins deux segments céramiques (6), et **en ce que** ledit au moins un élément de commande (8) est disposé directement sur l'enveloppe (2) de l'ampoule à vide (1), notamment directement sur au moins un segment céramique (6) de l'enveloppe (2).

3. Ampoule à vide (1) selon l'une des revendications précédentes, **caractérisée en ce que** ledit au moins un élément de commande (8) comprend au moins un condensateur et/ou au moins une résistance, et/ou ledit au moins un élément de commande est au moins un condensateur et/ou au moins une résistance, et/ou **en ce que** tous les éléments de commande sont constitués de condensateurs et/ou de résistances.

4. Ampoule à vide (1) selon l'une des revendications précédentes, **caractérisée en ce que** au moins deux éléments de commande (8) sont inclus, notamment trois éléments de commande (8) ou plus, lesquels sont disposés de manière circulaire sur la circonférence de ladite au moins une ampoule à vide (1).

5. Ampoule à vide (1) selon l'une des revendications précédentes, **caractérisée en ce qu'**au moins un anneau de blindage (7) est inclus, configuré sous forme annulaire et/ou circulaire, lequel est notamment disposé directement sur l'enveloppe (2) de l'ampoule à vide (1), et/ou lequel entoure la circonférence de l'ampoule à vide (1).

6. Ampoule à vide (1) selon l'une des revendications précédentes, **caractérisée en ce que** ledit au moins un élément de commande (8) est disposé de manière électrique et/ou spatiale entre ledit au moins un contact fixe (3) et ledit au moins un contact mobile (4).

7. Ampoule à vide (1) selon l'une des revendications précédentes, **caractérisée en ce que** ledit au moins un élément de commande (8) et/ou les éléments de commande (8) présentent une capacité totale dans la plage de 10 à 4 000 pF, notamment dans la plage de 500 à 4 000 pF.

8. Ampoule à vide (1) selon l'une des revendications précédentes, **caractérisée en ce que** l'ampoule à vide (1) est configurée pour commuter des tensions dans le domaine de la haute tension, notamment dans une plage supérieure ou égale à 52 kV.

9. Agencement comprenant des ampoules à vide (11) selon l'une des revendications précédentes, **caractérisé en ce qu'**au moins deux, notamment plus de deux ampoules à vide (1) sont montées électriquement en série.

10. Agencement (11) selon la revendication 9, **caractérisé en ce qu'**une enveloppe de cuve métallique et/ou d'isolateur (9) est incluse, dans laquelle sont disposées les ampoules à vide (1), notamment remplie d'air propre en tant que gaz isolant (10).

11. Procédé de commande du potentiel d'ampoules à vide (1) selon l'une des revendications 1 à 8 et/ou d'agencements comprenant des ampoules à vide (11) selon l'une des revendications 9 à 10, **caractérisé en ce qu'**une commande électrique du potentiel s'effectue au moyen d'éléments de commande (8), notamment au moyen de condensateurs et/ou de résistances, lesquels sont disposés directement sur des ampoules à vide (1).
